# EUROPÄISCHE PATENTSCHRIFT

(11) **EP 1 660 553 B1**
(45) Veröffentlichungstag und Bekanntmachung des Hinweises auf die Patenterteilung: **29.05.2013**
(21) Anmeldenummer: 04764322.6
(22) Anmeldetag: 20.08.2004
(51) Int. Cl.: C08G 18/67, C08G 18/42, C08G 18/36, C09D 175/16

(54) **STRAHLENHÄRTBARES UNGESÄTTIGTES POLYESTERURETHANHARZ**
RADIATION-HARDENING UNSATURATED POLYESTER URETHANE RESIN
RESINE POLYESTERURETHANNE NON SATUREE ET RADIODURCISSABLE

(30) Priorität: 27.08.2003 AT 13472003
(43) Veröffentlichungstag der Anmeldung: 31.05.2006
(73) Patentinhaber: Cytec Austria GmbH, 8402 Werndorf (AT)
(72) Erfinder: LUNZER, Florian, 8010 Graz (AT); AWAD, Rami-Raimund, Dr., 8042 Graz (AT)
(74) Vertreter: Deckers, Hellmuth Alexander
(86) Internationale Anmeldenummer: PCT/EP2004/009338
(87) Internationale Veröffentlichungsnummer: WO 2005/021614

(56) Entgegenhaltungen:
- EP-A- 0 539 030
- EP-A- 0 565 798
- EP-A- 1 323 785
- EP-A- 1 336 629
- WO-A-00/02943
- GB-A- 1 493 134
- US-B1- 6 284 321

## Beschreibung

Die Erfindung betrifft ein strahlenhärtbares ungesättigtes Polyesterurethanharz. Sie betrifft weiter ein Verfahren zu dessen Herstellung und dessen Verwendung als Bindemittel für Beschichtungen insbesondere auf Metallen.

Strahlenhärtbare Harze auf Basis von Polyesterurethan-Acrylaten sind beispielsweise bekannt aus der DE 198 35 849 A1. Gegenüber diesen Harzen für Pulverlacke besteht die Aufgabe, Harzlösungen mit einer solchen Viskosität bei einem Festkörper-Massenanteil von über 50 % bereitzustellen, die einen Auftrag auf Substrate durch Spritzen oder Walzen bei Raumtemperatur (23 °C) mit hoher Beschichtungsgeschwindigkeit ermöglichen. Die Viskosität eines derartigen Beschichtungsmittels läßt sich zwar durch Zusatz von Reaktivverdünnern vermindern; diese werden bei der Strahlenhärtung in die Beschichtung eingebaut, führen jedoch zur Versprödung und Verschlechterung der Haftung auf dem Substrat.

Bei den Untersuchungen, die zu der vorliegenden Erfindung geführt haben, wurde festgestellt, daß durch den Einbau von Fettsäuren in Polyesterurethan-Acrylate deren Viskosität vermindert und gleichzeitig die Haftung auf Untergründen, insbesondere auf Metallen, deutlich verbessert wird.

Gegenstand der vorliegenden Erfindung sind strahlenhärtbare ungesättigte Polyesterurethanharze ABC enthaltend Bausteine abgeleitet von einem gegebenenfalls ungesättigten Polyesterharz A, von mehrfunktionellen Isocyanaten B und Hydroxylgruppen enthaltenden olefinisch ungesättigten Monomeren C. Zur Formulierung von Beschichtungsmitteln werden die ungesättigten Polyesterurethanharze mit Reaktivverdünnern D gemischt, die mindestens eine mit dem ungesättigten Polyesterurethanharz copolymerisierbare Doppelbindung pro Molekül enthalten, und die bevorzugt eine Hydroxylzahl von 0 mg/g bis 10 mg/g, besonders bevorzugt 0 mg/g bis 5 mg/g aufweisen.

Die Polyesterharze **A** enthalten Bausteine abgeleitet von zweiwertigen aliphatischen linearen, verzweigten oder cyclischen Alkoholen **A1** mit 2 bis 20 Kohlenstoffatomen, gegebenenfalls Polyoxyalkylenpolyolen **A1'** mit Alkylengruppen mit 2 bis 6, bevorzugt 2 bis 4 Kohlenstoffatomen und zahlenmittleren Polymerisationsgraden von 2 bis 40, bevorzugt von 3 bis 35, wobei diese bevorzugt im Mittel zwei Hydroxylgruppen je Molekül aufweisen, von drei- oder mehrwertigen aliphatischen Alkoholen **A2** mit 3 bis 20 Kohlenstoffatomen, mindestens zwei wertigen aliphatischen oder aromatischen Säuren **A3** mit 2 bis 40 Kohlenstoffatomen, und Fettsäuren **A4** mit 6 bis 30 Kohlenstoffatomen, ausgewählt aus Palmitoleinsäure, Ölsäure, Elaidinsäure, Erucasäure, Sorbinsäure, Linolsäure, Linolensäure, Elaeostearinsäure, Arachidonsäure und Clupanodonsäure, sowie die aus natürlichen Ölen gewonnenen Mischungen von Fettsäuren wie Leinölfettsäure, Tallölfettsäure, Sonnenblumenölfettsäure, Ricinusölfettsäure, Kokosnußölfettsäure und Erdnußölfettsäure. Bevorzugt betragen die Massenanteile in der Kondensationsmischung zur Herstellung des Polyesters **A** für die Komponenten **A1** bis **A4** 2 % bis 20 %, 5 % bis 40 %, 5 % bis 50 %, und 15 % bis 60 %, wobei die Summe der Massenanteile in jedem Fall 100 % ergibt. Bevorzugt sind die Massenanteile für die Komponenten **A1** bis **A4** 5 bis 15 %, 10 % bis 30 %, 10 % bis 40 % und 20 % bis 50 %.

Bevorzugt werden für die Komponente **A1** Glykol, 1,2- und 1,3-Propylenglykol, 1,4-Butandiol, 1,6-Hexandiol, 1,5-Dihydroxy-3-oxapentan, 1,8-Dihydroxy-3,6-dioxaoctan, Neopentylglykol, 1,4-Dihydroxycyclohexan und 1,4-Cyclohexandimethanol sowie bi- und polycyclische aliphatische Alkohole wie der sogenannte "TCD-Alkohol" (Octahydro-4,7-methano-1H-inden-dimethanol).

Bevorzugte Polyoxyalkylenpolyole **A1'** sind Oligo- und Poly-äthylenglykol und Oligo- und Poly-propylenglykol sowie das sogenannten Poly-THF (Oligo- und Poly-1,4-butylenglykol). Die zahlenmittlere molare Masse Mₙ dieser Polyoxyalkylenpolyole **A1'** beträgt bevorzugt 62 g/mol bis 3000 g/mol, besonders bevorzugt 300 g/mol bis 2000 g/mol.

Bevorzugt werden für die Komponente **A2** Glycerin, Trimethyloläthan, Trimethylolpropan, Pentaerythrit, Ditrimethyloläthan, Ditrimethylolpropan, Dipentaerythrit, Sorbit und Mannit.

Bevorzugt werden für die Komponente A3 als zweibasige Säuren Malonsäure, Bernsteinsäure, Glutarsäure, Adipinsäure, Pimelinsäure, Korksäure, Sebacinsäure, Phthalsäure, Isophthalsäure, Terephthalsäure, Naphthalin-2,3- und 2,6-dicarbonsäure und Cyclohexandicarbonsäure, unter den dreibasigen Säuren werden Trimellithsäure, Trimesinsäure und Sulfoisophthalsäure bevorzugt; ebenso können in geringen Anteilen von bis zu 0,1 mol/mol an der Stoffmenge der Säuren gemäß A3 auch vier- oder mehrbasige Säuren wie Benzol- und Benzophenontetracarbonsäure eingesetzt werden.

Selbstverständlich kann man bei der Polykondensation zumindest teilweise auch Anhydride oder andere reaktive Derivate der Säuren **A3** wie beispielsweise deren Methylester einsetzen; ebenso kann man zumindest teilweise Ester der Alkohole **A1** und/oder **A2** mit flüchtigen Säuren wie Essigsäure einsetzen.

Bevorzugt werden für die Komponente **A4** die aus natürlichen Ölen gewonnenen Mischungen von Fettsäuren wie Leinölfettsäure, Tallölfettsäure, Sonnenblumenölfettsäure, Ricinusölfettsäure, Kokosnußölfettsäure und Erdnußölfettsäure.

Die mehrfunktionellen Isocyanate **B** haben mindestens zwei Isocyanatgruppen und sind bevorzugt ausgewählt aus aliphatischen linearen, verzweigten und cyclischen Diisocyanaten mit 4 bis 12 Kohlenstoffatomen im Alkylenrest sowie aromatischen Diisocyanaten mit 6 bis 18 Kohlenstoffatomen im Arylrest, sowie aus Allophanaten, Isocyanuraten, Biureten und Uretdionen der genannten Isocyanate. Bevorzugt werden 1,4-Tetramethylendiisocyanat, 1,6-Hexamethylendiisocyanat, Isophorondiisocyanat, 2,4- und 2,6-Toluylendiisocyanat, Bis(4-isocyanatophenyl)methan und Tetramethylxylylendiisocyanat sowie die oben genannten Derivate dieser Isocyanate.

Die Hydroxylgruppen enthaltenden olefinisch ungesättigten Monomeren C sind ausgewählt aus Allylalkohol, Methallylalkohol, und den Monoestern **C2** von zwei- oder mehrwertigen Alkoholen wie unter A1 und A2 genannt mit olefinisch ungesättigten Monocarbonsäuren **C21** wie Acrylsäure, Methacrylsäure, Vinylessigsäure, Crotonsäure und Isocrotonsäure. Bevorzugt werden Hydroxyäthy(meth)acrylat, 3-Hydroxypropyl(meth)acrylat, 4-Hydroxybutyl(meth)-acrylat, 2-Hydroxy-1-methyläthyl(meth)acrylat und 2-Hydroxy-2-methyläthyl(meth)acrylat.

Die Reaktivverdünner **D** enthalten mindestens eine mit dem ungesättigten Polyesterurethanharz copolymerisierbare Doppelbindung. Sie weisen bevorzugt eine Hydroxylzahl von 0 mg/g bis 10 mg/g, besonders bevorzugt 0 mg/g bis 5 mg/g auf. Bevorzugt werden lineare Acetale von zweiwertigen Alkoholen gemäß **A1,** die mit zwei Molekülen der unter **C21** genannten Säuren verestert sind, sowie cyclische Acetale von mehrwertigen Alkoholen gemäß A2, die mit mindestens einem Molekül einer der unter **C21** genannten Säuren verestert sind. Besonders bevorzugt werden Trimethylolpropanformal(meth)acrylat und Penterythritformaldi(meth)acrylat.

Die Herstellung der ungesättigten Polyesterurethanharze **ABC** erfolgt durch Polykondensation der Komponenten **A1** bis A4 zu dem Polyester **A,** der anschließend, bevorzugt in Gegenwart eines Katalysators und eines Polymerisationsinhibitors, mit dem Reaktionsprodukt **BC** aus einem mehrfunktionellen Isocyanat **B** und einer Hydroxylgruppen enthaltenden ungesättigten Verbindung C umgesetzt wird, wobei die reaktiven Isocyanatgruppen in **BC** vollständig verbraucht werden. Das Reaktionsprodukt **BC** weist im Mittel mindestens eine Isocyanatgruppe und mindestens eine olefinische Doppelbindung auf.

Die Polykondensation wird bei Temperaturen von 120 °C bis 200 °C durchgeführt, dabei beträgt die Reaktionszeit zwei bis zwanzig Stunden. Zur Erleichterung der Entfernung des Kondensationsprodukts (Wasser, oder im Fall der reaktiven Derivate auch niedere Alkohole oder flüchtige Säuren) kann ein Kreislaufmittel zugesetzt werden, das mit dem entstehenden Wasser ein Azeotrop bildet und nach Kondensation und Phasentrennung wieder zurückgeführt wird. Nach beendeter Reaktion wird das Kreislaufmittel, bevorzugt durch Destillation unter vermindertem Druck, abgetrennt.

Der Polyester A wird dann mit dem separat hergestellten Addukt aus dem Isocyanat **B** und der Hydroxylgruppen enthaltenden ungesättigten Verbindung C umgesetzt, wobei metallorganische Verbindungen wie Dibutylzinndilaurat, organische Titanverbindungen oder Salze oder Chelate von Wismut als Katalysator zugesetzt werden können. Nach beendeter Urethanbildung (vollständiger Verbrauch der Isocyanatgruppen aus **BC**) wird bevorzugt der Reaktivverdünner **D** zugesetzt. Dabei wird ein Festkörper-Massenanteil von ca. 50 % bis ca. 70 % eingestellt, bezogen auf die Masse der flüssigen Mischung von **ABC** und **D.** Der Zusatz des Reaktivverdünners kann insbesondere bei der Reaktionstemperatur für die Polykondensation erfolgen, da die Mischung auf diese Weise niederviskos und gut rührbar bleibt.

Die Mischung von dem ungesättigten Polyesterurethanharz und dem Reaktivverdünner kann in dünner Schicht von 20 µm bis 80 µm (Trockenschichtdicke) auf beliebige Substrate, bevorzugt auf Metalle, insbesondere unedle Metalle, aufgebracht werden. Zur Beschleunigung der Härtung durch energiereiches Licht oder Bestrahlung wird üblicherweise ein Photoinitiator zugesetzt.

Das beschichtete Substrat wird anschließend bestrahlt, durch UV-Licht oder durch Elektronenstrahlen, und dadurch gehärtet. Als Substrate werden bevorzugt Metalle, Holz, Papier, Pappe oder Kunststoffe eingesetzt. Die ausgehärteten Beschichtungen zeigen eine ausgezeichnete Haftung auf dem Untergrund, insbesondere auf Metallen. Die so beschichteten Bleche lassen sich an derselben Stelle mehrfach um 90° biegen ohne Ablösung der Beschichtung. Daher sind die erfindungsgemäßen Beschichtungsmittel insbesondere zum Beschichten von Metallbändern (coil-coating) geeignet, die später durch Pressen, Tiefziehen oder Stanzen verformt werden.

Die nachfolgenden Beispiele erläutern die Erfindung.

### Beispiele

### Beispiel 1 Herstellung eines Polyesters

62,1 g Glykol, 134,2 g Trimethylolpropan, 146,1 g Adipinsäure und 280 g Erdnußölfettsäure wurden gemischt und unter Zusatz von 0,2 g Zinnoctoat und 30 g Methylisobutylketon auf 180 °C erhitzt Das Destillat wurde kondensiert und nach Phasentrennung wurde das Lösungsmittel zurückgeführt. Nach ca. 10 Stunden war eine Säurezahl von unter 5 mg/g erreicht. Das Lösungsmittel wurde durch Destillation unter vermindertem Druck abgezogen, es verblieben ca. 569 g eines Polyesters.

### Beispiel 2 Herstellung eines olefinisch ungesättigten Monoisocyanats

174 g Toluylendiisocyanat wurden mit 116 g Hydroxyäthylacrylat bei 25 °C unter Kühlung vermischt. Die Mischung wurde vorsichtig auf 65 °C erwärmt und bei dieser Temperatur gehalten, bis die Isocyanatkonzentration konstant war.

### Beispiel 3 Herstellung eines Beschichtungsmittels

100 g des Polyesters aus Beispiel 1 wurden mit 0,2 g Hydrochinonmonomethyläther und 0,2 g Dibutylzinndilaurat auf 50 °C geheizt Zu dieser Mischung wurden portionsweise 70 g des ungesättigten Isocyanats aus Beispiel 2 gegeben. Die Temperatur wurde durch Kühlung auf unter 80 °C gehalten. Nach beendeter Zugabe wurde bei 80 °C weiter gerührt, bis kein Isocyanat mehr nachzuweisen war (vier Stunden). Anschließend wurden 113,4 g Trimethylolpropanformalacrylat zugegeben, und die erhaltene Mischung wurde auf Raumtemperatur (23 °C) abgekühlt. Die Mischung wies einen Festkörper-Massenanteil von ca. 60 % und eine Viskosität bei 23 °C und 25 s⁻¹ von 2980 mPa ·s auf.

### Beispiel 4 Prüfung der Beschichtung

Das Beschichtungsmittel des Beispiels 3 und zum Vergleich ein handelsübliches Polyesterurethan-Acrylatharz mit Trimethylolpropanformalacrylat als Reaktivverdünner (Festkörper-Massenanteil 55 %) wurden mit 5 g eines Photoinitiators (^{®}Darocure 1173, Benzophenon-Typ) auf 100 g des reaktiwerdünnerhaltigen Bindemittels formuliert. Dabei ergab sich für das Beschichtungsmittel mit der Mischung aus Beispiel 3 eine Viskosität bei 23 °C und 25 s⁻¹ von 3000 mPa s und für das Vergleichsbeispiel eine Viskosität bei 23 °C und 25 s⁻¹ von 7660 mPa s.

Die Pendelhärte des Films (gemessen auf einer Glasplatte bei 50 *µ*m Schichtdicke des Trockenfilms) betrug 24 h nach der Härtung bei dem Beschichtungsmittel des Beispiels 3 83 s, bei dem Vergleich 33 s.

Mit diesen Klarlacken wurden ein Rostschutz-Bonderblech (Stahlblech aus ST 1405, unbehandelt, einseitig geschliffen, Beispiel 4.1 und 4.1V) und ein Stahlblech 26S/60/OC (aus ST 1405, spritzphosphatiert, Beispiel 4.2 und 4.2 V) beschichtet und durch Bestrahlen mit UV-Licht aus einer Quecksilberdampflampe (Leistung 80 Watt, 10 cm Abstand, 4 m/min Bandgeschwindigkeit) gehärtet. Die Naßfilmdicke war jeweils 50 *µ*m. Auf weitere Stahlbleche 26S/60/OC wurden Filme mit einer Naßfilmdicke von 8 *µ*m aufgetragen (Beispiel 4.3 und 4.3V).

Dabei wurde die folgenden Ergebnisse erhalten:

**Tabelle 1 mechanische Prüfung der beschichteten Bleche**

| Beispiel | | 4.1 | 4.1V | 4.2 | 4.2V | 4.3 | 4.3V |
|---|---|---|---|---|---|---|---|
| Erichsen-Tiefung | in mm | 9 | 9 | 9 | 9,5 | 9,5 | 9 |
| Erichsen-Schlag | in in lb | 80; 80 | 80; 80 | 80; 80 | 80; 80 | 80; 80 | 80; 80 |
| | in J | 9,04;9,04 | 9,04;9,04 | 9,04;9,04 | 9,04;9,04 | 9,04;9,04 | 9,04;9,04 |
| Gitterschnitt | | 0; 0 | 0; 0 | 0; 0 | 0; 0 | 0; 0 | 0; 0 |
| T-Bend | | 0T | 2T;3T | 0T | 2T;3T | 0T | 2T; 3T |

| | | | | | | | |
|---|---|---|---|---|---|---|---|
| (1 in·lb = 25,4 mm · 0,45359 kg · 9,81 m/s² = 113,0249 · 10⁻³ J = 0,1130249 J) | | | | | | | |

Die Erichsen-Tiefung wurde gemäß der Norm DIN EN ISO 1520, der Gitterschnitt gemäß der Norm DIN EN ISO 2409 gemessen und ausgewertet. Die angegebene Tiefung ist die Verformung durch eine auftreffende Kugel (in mm), bei der der Lack noch nicht von der verformten Stelle abplatzt. Eine "0" im Gitterschnitt bedeutet, daß keines der durch gitterförmiges Einritzen des gehärteten Lacks entstandenen Quadrate nach Abdecken der Schnitte mit einem Klebeband und Abreißen desselben Eintißstellen zeigt.

Der Erichsen-Schlag-Test wird gemäß der ASTM-Norm D 2794 durchgerührt. Hier wird die Energie angegeben, die eine fallende Kugel hat, wobei sich die Lackschicht an der Ausbeulung (vom Kugelauftreffpunkt abgewandte Seite) noch nicht löst.

Der T-Bend wurde gemäß der Norm ASTM D 4145 bestimmt. Dabei bedeutet
- T0: keine Risse bei einer Biegung des Substrats um 180° und kein Haftungsverlust bei Abdecken der Biegestelle mit einem Klebeband und Abreißen desselben,
entsprechend bedeuten T1 usw. keine derartige Schädigungsmerkmale bei zweifacher, dreifacher etc. Biegung im Sinne einer flachen Wicklung jeweils um 180°. Dabei ist der Biegeradius der ersten Biegung selbstverständlich der geringste.

## Patentansprüche

1. Strahlenhärtbare ungesättigte Polyesterurethanharze **ABC** enthaltend Bausteine abgeleitet von einem Polyester **A,** von mehrfunktionellen Isocyanaten **B** und Hydroxylgruppen enthaltenden olefinisch ungesättigten Monomeren C, **dadurch gekennzeichnet, daß** die Herstellung der Polyester **A** erfolgt durch Polykondensation von zweiwertigen aliphatischen linearen, verzweigten oder cyclischen Alkoholen **A1** mit 2 bis 20 Kohlenstoffatomen, gegebenenfalls von drei- oder mehrwertigen aliphatischen Alkoholen **A2** mit 3 bis 20 Kohlenstoffatomen, mindestens zweiwertigen aliphatischen oder aromatischen Säuren A3 mit 2 bis 40 Kohlenstoffatomen, und Fettsäuren A4 mit 6 bis 30 Kohlenstoffatomen ausgewählt aus Palmitoleinsäure, Ölsäure, Elaidinsäure, Erucasäure, Sorbinsäure, Linolsäure, Linolensäure, Elaeostearinsäure, Arachidonsäure und Clupanodonsäure und den aus natürlichen Ölen gewonnene Mischungen solcher Fettsäuren, nämlich Leinölfettsäure, Tallölfettsäure, Sonnenblumenölfettsäure, Ricinusölfettsäure und Erdnußölfettsäure.

2. Strahlenhärtbare ungesättigte Polyesterurethanharze **ABC** nach Anspruch 1, **dadurch gekennzeichnet, daß** die Polyester **A** zusätzlich Bausteine aufweisen von Polyoxyalkylenpolyolen **A1'** mit Alkylengruppen mit 2 bis 6 Kohlenstoffatomen und zahlenmittleren Polymerisationsgraden von 2 bis 40.

3. Strahlenhärtbare ungesättigte Polyesterurethanharze **ABC** nach Anspruch 2, **dadurch gekennzeichnet, daß** die Polyoxyalkylenpolyole **A1'** aus gewählt sind aus Oligo- und Poly-1,4-butylenglykol.

4. Strahlenhärtbare ungesättigte Polyesterurethanharze **ABC** nach Anspruch 1, **dadurch gekennzeichnet, daß** die Massenanteile in der Kondensationsmischung zur Herstellung des Polyesters **A** für die Komponenten **A1** bis A4 2 % bis 20 %, 5 % bis 40 %, 5 % bis 50 %, und 15 % bis 60 % betragen, wobei die Summe der Massenanteile in jedem Fall 100 % ergibt.

5. Strahlenhärtbare ungesättigte Polyesterurethanharze **ABC** nach Anspruch 1, **dadurch gekennzeichnet, daß** die Polyester **A** eine Hydroxylzahl von 0 mg/g bis 150 mg/g und eine Säurezahl von 5 mg/g bis 200 mg/g aufweisen.

6. Verfahren zur Herstellung von strahlenhärtbaren ungesättigten Polyesterurethanharzen **ABC** nach Anspruch 1, **dadurch gekennzeichnet, daß** durch Polykondensation der Komponenten **A1** bis **A4** ein Polyester **A** gebildet wird, der anschließend mit dem Reaktionsprodukt BC aus einem mehrfunktionellen Isocyanat **B** und einer Hydroxylgruppen enthaltenden ungesättigten Verbindung C umgesetzt wird, wobei die reaktiven Isocyanatgruppen in **BC** vollständig verbraucht werden, und wobei das Reaktionsprodukt **BC** im Mittel mindestens eine Isocyanatgruppe und mindestens eine olefinische Doppelbindung aufweist.

7. Beschichtungsmittel enthaltend Reaktivverdünner D sowie strahlenhärtbare ungesättigte Polyesterurethanharze **ABC** gemäß Anspruch 1.

8. Beschichtungsmittel nach Anspruch 7, **dadurch gekennzeichnet, daß** die Reaktivverdünner D mindestens eine mit dem ungesättigten Polyesterurethanharz copolymerisierbare Doppelbindung pro Molekül enthalten.

9. Beschichtungsmittel nach Anspruch 7, **dadurch gekennzeichnet, daß** die Reaktivverdünner D eine Hydroxylzahl von 0 mg/g bis 10 mg/g aufweisen.

10. Beschichtungsmittel nach Anspruch 7, **dadurch gekennzeichnet, daß** ihr Festkörper-Massenanteil 50 % bis 70 % beträgt.

11. Verfahren zum Beschichten von Substraten, umfassend Auftragen eines Beschichtungsmittels nach Anspruch 7 und Härten der Beschichtung durch Bestrahlen mit energiereicher Strahlung.

## Claims

1. Radiation-curable unsaturated polyesterurethane resins **ABC** comprising moieties derived from a polyester **A,** from multifunctional isocyanates **B** and hydroxyl group-containing olefinically unsaturated monomers **C characterised in that** the preparation of the polyesters **A** is effected by polycondensation of dihydric aliphatic linear, branched or cyclic alcohols **A1** having from two to twenty carbon atoms, optionally, tri- or polyhydric aliphatic alcohols **A2** having from three to twenty carbon atoms, of at least dibasic aliphatic or aromatic acids **A3** having from two to forty carbon atoms, and of fatty acids **A4** having from six to thirty carbon atoms, selected from the group consisting of palmitoleic acid, oleic acid, elaidic acid, erucic acid, sorbic acid, linoleic acid, linolenic acid, eleostearic acid, arachidonic acid, and clupanodonic acid , and mixtures of such fatty acids obtained from natural oils, viz., linseed oil fatty acid, tall oil fatty acid, sunflower oil fatty acid, castor oil fatty acid, and peanut oil fatty acid.

2. Radiation-curable unsaturated polyesterurethane resins **ABC** according to claim 1, **characterised in that** the polyesters additionally comprise moieties derived from polyoxyalkylene polyols **A1'** with alkylene groups having from two to six carbon atoms and number average degrees of polymerisation of from two to forty.

3. Radiation-curable unsaturated polyesterurethane resins **ABC** according to claim 2, **characterised in that** the polyoxyalkylene polyols **A1'** are selected from oligo- and poly-1,4-butylene glycol.

4. Radiation-curable unsaturated polyesterurethane resins **ABC** according to claim 1, **characterised in that** the mass fractions in the condensation mixture to make the polyester **A** are for the components **A1** to **A4:** from 2 % to 20 %; from 5 % to 40 %, from 5 % to 50 %; and from 15 % to 60 %, the sum of the mass fractions always totalling to 100 %.

5. Radiation-curable unsaturated polyesterurethane resins **ABC** according to claim 1, **characterised in that** the polyesters A have a hydroxyl number of from 0 mg/g to 150 mg/g, and an acid number of from 5 mg/g to 200 mg/g.

6. A process for the preparation of radiation-curable unsaturated polyesterurethane resins **ABC** according to claim 1, **characterised in that** a polyester **A** is formed by polycondensation of the components **A1** through **A4,** which is subsequently reacted with the reaction product BC of a multifunctional isocyanate **B** and a hydroxyl group-containing unsaturated compound C, wherein the reactive isocyanate groups of **BC** are completely consumed, and wherein the reaction product **BC** has, on average, at least one isocyanate group, and at least one olefinic double bond.

7. Coating compositions comprising reactive diluents **D** as well as radiation curable unsaturated polyesterurethane resins **ABC** according to claim 1.

8. Coating compositions according to claim 7, **characterised in that** the reactive diluents D have at least one double bond per molecule which is copolymerisable with the unsaturated polyesterurethane resin.

9. Coating compositions according to claim 7, **characterised in that** the reactive diluents **D** have a hydroxyl number of from 0 mg/g to 10 mg/g.

10. Coating compositions according to claim 7, **characterised in that** their mass fraction of solids is from 50 % to 70 %.

11. A process for coating of substrates, comprising applying a coating composition according to claim 7 and curing of the coating by irradiation with energy-rich radiation.

## Revendications

1. Résines **ABC** polyester-uréthanne insaturées durcissables par rayonnement, comprenant des éléments dérivés d'un polyester **A,** des isocyanates multifonctionnels **B**, et de monomères C à insaturation oléfinique, **caractérisées en ce que** la synthèse des polyesters **A** est faite par polycondensation des alcools **A1** bivalents aliphatiques linéaires, ramifiés ou cycliques, ayant de deux à vingt atomes de carbone, facultativement, aussi des alcools **A2** trivalents ou polyvalents ayant de trois à vingt atomes de carbone, des acides **A3** aliphatiques ou aromatiques ayant de deux à quarante atomes de carbone, et des acides gras **A4** ayant de six à trente atomes des carbone, choisis parmi les acides palmitoléique, oléique, élaïdique, érucique, sorbique, linoléique, linolénique, éléostéarique, arachidique, et clupanodique, et des mélanges de tels acides gras obtenu par des huiles naturels, à savoir, des acides gras de l'huile de lin, de l'huile tallique, de l'huile de tournesol, de l'huile de ricin, et de l'huile d'arachide.

2. Les résines **ABC** polyester-uréthanne insaturées durcissables par rayonnement selon la revendication 1, **caractérisées en ce que** les polyesters **A** comprennent aussi des éléments dérivés de polyols polyoxyalcylènes **A1'** comprenant de groupes alcylène ayant de deux à six atomes de carbone, et ayant un degré de polymérisation moyen en nombre de deux à quarante.

3. Les résines **ABC** polyester-uréthanne insaturées durcissables par rayonnement selon la revendication 1, **caractérisées en ce que** les polyols polyoxyalcylènes **A1'** sont choisis parmi le oligo- et le poly-1,4-butyléne glycol.

4. Les résines **ABC** polyester-uréthanne insaturées durcissables par rayonnement selon la revendication 1, **caractérisées en ce que** les fractions massiques dans le mélange de condensation pour la préparation du polyester **A** sont, pour les composants **A1** à **A4,** de 2 % jusqu'à 20 %, de 5 % jusqu'à 40 %, de 5 % jusqu'à 50 %, et de 15 % jusqu'à 60 %, la somme des fractions massiques étant 100 % en chaque cas.

5. Les résines **ABC** polyester-uréthanne insaturées durcissables par rayonnement selon la revendication 1, **caractérisées en ce que** les polyesters **A** possèdent un indice d'hydroxyle de 0 mg/g jusqu'à 150 mg/g, et un indice d'acide de 5 mg/g jusqu'à 200 mg/g.

6. Procédé de préparation des résines **ABC** polyester-uréthanne insaturées durcissables par rayonnement selon la revendication 1, **caractérisé en ce que** un polyester **A** est formé par polycondensation des composants **A1** à **A4,** qui est réagi ensuite avec le produit de réaction **BC** d'un isocyanate multifonctionnel **B** et un composé insaturé **C** comprenant de groupes hydroxyles, avec consommation complète des groupes réactifs isocyanates de **BC,** le produit de réaction **BC** ayant, en moyenne, au moins un groupe isocyanate et au moins un groupe oléfinique insaturé.

7. Composition de revêtement comprenant un diluant réactif et des résines **ABC** polyester-uréthanne insaturées durcissables par rayonnement selon la revendication 1.

8. Composition de revêtement selon la revendication 7, **caractérisée en ce que** les diluants réactifs D comprennent au moins une double liaison par molécule qui est copolymérisable avec la résine polyester uréthanne insaturée.

9. Composition de revêtement selon la revendication 7, **caractérisée en ce que** les diluants réactifs ont un indice d'hydroxyle de 0 mg/g jusqu'à 10 mg/g.

10. Composition de revêtement selon la revendication 7, **caractérisée en ce que** leur fraction massique des solides est de 50 % jusqu'à 70 %.

11. Procédé pour le revêtement des substrats qui comprend l'application d'un agent de revêtement selon la revendication 7, et le durcissement du revêtement par rayonnement avec des rayons riche en énergie.
